# FASCICULE DE BREVET EUROPEEN

(11) **EP 1 193 468 B1**
(45) Date de publication et mention de la délivrance du brevet: **05.08.2009**
(21) Numéro de dépôt: 01402513.4
(22) Date de dépôt: 28.09.2001
(51) Int. Cl.: G01B 11/24, G02C 13/00

(54) **Procédé de lecture optique de la forme d'un profilé et application au relevé du bord intérieur d'un cercle de monture de lunettes**
Optisches Verfahren zur Messung der Form eines Profils und Anwendung dieses Verfahrens für das Innenprofil einer Brillenfassung
Procedure to optically determine a profile and its application to the interior contour of a spectacleframe

(30) Priorité: 02.10.2000 FR 0012520
(43) Date de publication de la demande: 03.04.2002
(73) Titulaire: ESSILOR INTERNATIONAL (Compagnie Générale d'Optique), F-94220 Charenton-le-Pont (FR)
(72) Inventeur: Farcy, René, 91370 Verrieres le Buisson (FR); Guirriec, Florent, 29590 Loperec (FR); Almeras, Emmanuel, 75012 Paris (FR); Guillermin, Laurent, 75011 Paris (FR)
(74) Mandataire: Santarelli

(56) Documents cités:
- FR-A- 1 312 164
- FR-A- 2 375 578
- FR-A- 2 399 000
- FR-A- 2 538 538

## Description

L'invention concerne un procédé de lecture optique sans contact de la forme tridimensionnelle d'un quelconque profilé selon le principe dit de la coupe lumineuse. Elle trouve une application particulièrement pertinente dans la lecture de la forme du bord intérieur, dit drageoir, d'un cercle de monture de lunettes. L'invention a également trait à un dispositif pour la mise en oeuvre de ce procédé dans son application à la lecture d'un tel drageoir de monture de lunettes.

Lors de la fabrication d'une paire de lunettes, il est nécessaire pour pouvoir monter les verres sur leur monture, d'ajuster le bord extérieur de chacun de ces verres à celui intérieur, communément appelé drageoir, du cercle correspondant de la monture. A cet effet, on utilise le plus souvent une machine de meulage à commande numérique qui ajuste le bord extérieur de chaque verre à la forme du drageoir dans lequel il doit être serti.

Pour pouvoir effectuer ce meulage commandé numériquement, il est nécessaire de disposer d'une modélisation numérique de la forme tridimensionnelle du drageoir concerné.

Actuellement, l'acquisition de la forme tridimensionnelle d'un drageoir est opérée au moyen d'un dispositif de mesure par contact dans lequel un palpeur, associé à une tête de mesure rotative autour de l'axe central du cercle de monture, vient au contact physique du drageoir et glisse le long de celui-ci sur toute sa périphérie. Toutefois, ce type de mesure par contact ne donne pas entière satisfaction, et ce pour deux raisons essentielles. Tout d'abord, le palpeur, qui est constamment rappelé en appui contre le drageoir, peut, dans certains cas, générer une déformation du cercle de monture faussant les mesures. D'autre part, la mécanique de guidage du palpeur ne permet pas une acquisition complète du profil du drageoir sur tout son pourtour en un temps acceptable, c'est-à-dire en moins d'une minute. Cette mécanique, de précision, est en outre relativement complexe, ne serait-ce que pour pouvoir obtenir une précision acceptable avec un débattement radial suffisant du palpeur. Il en résulte des difficultés de fabrication et de maintenance au détriment des coûts.

Afin de remédier à ces inconvénients, on a déjà proposé par le passé un certain nombre de procédés et dispositifs de lecture optique tridimensionnelle sans contact de la forme du drageoir.

C'est ainsi que les documents FR 2 679 997 et FR 2 713 758 proposent un procédé de lecture optique sans contact de la forme d'un drageoir de cercle de monture de lunettes, consistant à éclairer, au moyen d'un pinceau lumineux (faisceau laser cohérent rectiligne), certains points caractéristiques du drageoir et à relever au moyen d'un capteur optique à matrice d'éléments photosensibles du type CCD l'impact du faisceau en chacun de ces points. Les coordonnées spatiales de chacun des points ainsi éclairés sont ensuite calculées par triangulation à partir de la position relevée par le capteur de l'image de l'impact ponctuel du faisceau sur la monture et des configurations spatiales respectives du faisceau laser et du capteur. Pour permettre l'éclairage et le relevé de points sur toute la hauteur du drageoir, le faisceau laser, et plus précisément sa source, sont mobiles suivant l'axe du cercle concerné de la monture, c'est-à-dire en pratique verticalement.

Les documents WO 98/45664 et WO 00/03839 proposent un procédé de lecture de type similaire, mais dans lequel le faisceau lumineux, au lieu de se présenter sous la forme d'un pinceau rectiligne, est au contraire divergent dans un plan, de manière à couper transversalement le drageoir. Dans ce procédé, dit de la coupe lumineuse, le capteur reçoit l'image de la trace (ou coupe lumineuse) du faisceau de lumière plan sur le drageoir. Ainsi, chaque relevé optique ne concerne-t-il pas seulement un point du drageoir, mais une section transversale complète de celui-ci.

Ce procédé de coupe lumineuse est décrit en détail dans le document :
- "A perspective, on range finding techniques for computer vision", R.A. Jarvis, IEEE transactions on pattern analysis and machine intelligence, Vol. PAMI-5, n° 2 mars 1983.

Il consiste essentiellement à balayer le profilé avec un faisceau lumineux plan coupant transversalement le profilé, et à relever simultanément, sur des moyens de réception optique possédant un axe optique de pointage formant un angle de pointage constant et non nul avec le faisceau lumineux, en une série de positions le long du profilé, la trace de ce faisceau lumineux plan sur le profilé. Enfin, un calculateur programmé déduit des relevés effectués en ces différentes positions la forme tridimensionnelle du profilé.

Pour la mise en oeuvre de ce procédé, il est proposé dans les documents WO 98/45664 et WO 00/03839 des dispositifs de lecture optique sans contact de la forme tridimensionnelle du bord intérieur, dit drageoir, d'un cercle de monture de lunettes, comportant un support pour le cercle de monture et une tête de lecture qui est rotative par rapport au support autour d'un axe de rotation et à laquelle est associé un capteur de sa position angulaire relative par rapport à ce support, cette tête de lecture comportant d'une part des moyens émetteurs agencés pour projeter un faisceau lumineux plan coupant transversalement le drageoir et d'autre part des moyens de réception optique agencés pour relever, quelle que soit la position angulaire relative de la tête de lecture par rapport au support de monture, la trace du faisceau lumineux plan sur le drageoir suivant un axe optique de pointage formant un angle de pointage constant et non nul avec le faisceau lumineux.

On comprend donc que, par rapport au procédé de relevé ponctuel précédemment cité, ce procédé de coupe lumineuse et son dispositif de mise en oeuvre offrent l'avantage de relever, à chaque capture d'image par les moyens de réception optique, la section complète du drageoir, sur toute sa hauteur, sans qu'il soit nécessaire de prévoir pour chaque position angulaire de la tête de lecture un quelconque déplacement vertical du faisceau laser pour un balayage transversal de la section concernée du drageoir.

Cependant, quel que soit le type de faisceau lumineux utilisé, pinceau rectiligne ou faisceau divergent plan, plusieurs problèmes non encore résolus s'opposent à une mise en oeuvre pratique de ces procédés de lecture optique sans contact.

La première difficulté résulte de la diversité des tailles de montures de lunettes qui impose une profondeur de champ minimum de l'ordre de 4 cm. Or, les contraintes pour obtenir un sertissage du verre dans le drageoir de qualité satisfaisante, en particulier pour les montures métalliques, imposent une précision relativement élevée pour le meulage du bord extérieur du verre en correspondance avec la forme du drageoir. Il en résulte une exigence de précision sur la lecture de la forme du drageoir qui est de l'ordre du centième de millimètre.

Dans la mesure où ces deux exigences, relatives d'une part à la profondeur du champ et d'autre part à la précision de la mesure, sont antagonistes, il n'est actuellement pas possible de les satisfaire avec les composants disponibles sur le marché. En effet, un compromis de profondeur de champ de 4 cm pour une précision de 0,01 mm impose l'utilisation d'un capteur disposant de 4000 points de mesure, c'est-à-dire une caméra CCD de 2000 x 2000 pixels avec une résolution de 0,5 pixel. Une telle résolution est d'autant plus difficile à obtenir qu'une caméra de grande surface implique un champ large, source d'aberrations optiques notamment aux bords, qui, sauf à disposer d'une optique de haute performance relativement coûteuse et encombrante, s'oppose à l'obtention d'une résolution inférieure au pixel. En outre, la génération d'un faisceau de lumière plan divergent, contenu dans un plan suffisamment fin sur 4 cm de profondeur n'est pas aisée et nécessite la mise en place d'une optique de précision relativement coûteuse et encombrante.

Au vu de ces contraintes, la seule solution pratique pour mettre en oeuvre ce procédé de lecture avec la précision suffisante est d'asservir mécaniquement l'ensemble formé par le faisceau laser et le capteur pour le maintenir à très faible distance du drageoir, de manière à restreindre la profondeur de champ exigée pour le capteur. Mais dans ce cas, il est nécessaire de disposer d'un mécanisme de suivi dont la complexité et le coût se cumulent avec ceux du dispositif de lecture optique.

La lecture optique d'un drageoir de monture de lunettes se heurte à une seconde difficulté. On sait en effet que les montures de lunettes peuvent être réalisées selon des formes très différentes les unes des autres, et avec des matériaux divers possédant leurs propriétés optiques propres, notamment en ce qui concerne la réflexion, l'absorption, la diffusion ou encore la rétro-diffusion. Un procédé de lecture optique ne peut donc être validé qu'à la condition de s'avérer efficace pour tous les types de montures, en particulier celles présentant des cercles de formes aussi bien circulaires qu'ovales ou rectangulaires et réalisées en métal, plastique opaque, plastique multicolore ou encore plastique transparent ou translucide avec ou sans inserts métalliques. Du fait de cette diversité de formes et de matériaux constitutifs des montures, la réception par le capteur optique de l'image de la trace du faisceau laser sur le drageoir peut s'avérer impossible du fait de certains phénomènes optiques en fonction de la configuration d'éclairage et de capture d'image rencontrée. En particulier, les difficultés suivantes doivent être envisagées :
- point ou zone spécifique de réflexion excessivement intense pour un angle d'éclairage de relevé donné,
- présence d'inserts métalliques dans un cercle de monture en matière plastique transparente ou translucide provoquant une réflexion parasite masquant, par son intensité, la trace du faisceau plan de lumière sur le drageoir ou le rendant inexploitable,
- angle d'incidence du faisceau lumineux induisant une réflexion trop ou pas assez prononcée pour être exploitable par le capteur optique, en fonction du matériau constitutif de la monture concernée,
- forme oblongue fortement prononcée du cercle de la monture interdisant l'éclairage de certains secteurs du drageoir sous un angle donné, le faisceau de lumière frappant l'extérieur du cercle de la monture.

Dans ce contexte, un but de la présente invention est de concevoir un procédé de lecture optique sans contact de la forme tridimensionnelle d'un profilé, tel que le drageoir d'un cercle de monture de lunettes, permettant de s'affranchir autant que possible du compromis entre résolution et profondeur de champ en "augmentant" la profondeur de champ tout en conservant une résolution satisfaisante, sans pour autant qu'il soit nécessaire de mettre en oeuvre des moyens optiques de relevé complexes et coûteux.

Un autre but de l'invention est d'éviter autant que possible les pertes de signal lumineux, c'est-à-dire de rendre l'image de la trace du faisceau laser sur le drageoir exploitable par les moyens de réception optique dans un maximum de situations et types de montures, notamment celles précédemment énoncées.

En vue de la résolution de l'un au moins de ces deux buts, on propose selon la revendication 1 un procédé de lecture optique sans contact de la forme tridimensionnelle d'un quelconque profilé selon le principe dit de la coupe lumineuse, consistant à :
- balayer le profilé avec un faisceau lumineux plan coupant transversalement le profilé,
- relever simultanément, sur des moyens de réception optique possédant un axe optique de pointage formant un angle de pointage constant et non nul avec le faisceau lumineux, en une série de positions le long du profilé, la trace de ce faisceau lumineux plan sur le profilé et
- déduire des relevés effectués en ces différentes positions la forme tridimensionnelle du profilé, procédé dans lequel à chaque relevé, le faisceau lumineux dont la trace sur le profilé est relevée par les moyens de réception optique, est choisi parmi une pluralité de faisceaux lumineux pré-établis susceptibles d'être alternativement activés.

Plus spécifiquement, ce procédé peut avantageusement être appliqué au cas plus spécifiquement évoqué ci-dessus de la lecture de la forme du bord intérieur, dit drageoir, d'un cercle de monture de lunettes.

On propose également, pour la mise en oeuvre de ce procédé et selon la revendication 13, un dispositif de lecture optique sans contact de la forme tridimensionnelle du bord intérieur, dit drageoir, d'un cercle de monture de lunettes, comportant un support pour le cercle de monture et une tête de lecture qui est rotative par rapport au support autour d'un axe de rotation et à laquelle est associé un capteur de sa position angulaire relative par rapport à ce support, cette tête de lecture comportant d'une part des moyens émetteurs agencés pour projeter un faisceau lumineux plan coupant transversalement le drageoir et d'autre part des moyens de réception optique agencés pour relever, quelle que soit la position angulaire relative de la tête de lecture par rapport au support de monture, la trace du faisceau lumineux plan sur le drageoir suivant un axe optique de pointage formant un angle de pointage constant et non nul avec le faisceau lumineux, dispositif dans lequel les moyens émetteurs sont aptes à projeter au moins deux faisceaux lumineux distincts et susceptibles d'être alternativement activés.

Ainsi, à chaque capture d'image, est-il possible de choisir, parmi la pluralité de faisceaux lumineux disponibles, celui dont la trace sur le profilé est la plus propice à un relevé précis par les moyens de réception optique suivant leur axe optique de pointage. Ce choix du faisceau lumineux le plus adapté à la configuration rencontrée peut servir l'un et/ou l'autre des deux buts précités.

Sous un premier aspect, le choix offert par les moyens émetteurs entre plusieurs faisceaux lumineux peut engendrer une "augmentation" artificielle de la profondeur de champ des moyens de réception optique, sans perte de précision. On sait en effet, comme mentionné précédemment, que pour conserver une bonne précision de relevé, sans mettre en oeuvre des moyens optiques complexes, encombrants et coûteux, il est nécessaire d'admettre une profondeur de champ restreinte des moyens de réception optique. Il s'en suit qu'avec un faisceau lumineux unique, la trace de ce faisceau lumineux ne manquerait pas de sortir du champ des moyens de réception optique en différentes zones du profilé, sauf à prévoir un suivi à distance constante du profilé par les moyens de réception optique. Selon l'invention, cette difficulté tenant à la nécessaire étroitesse du champ des moyens de réception optique est compensée par la possibilité d'éclairer le profilé par un autre faisceau lumineux, décalé par rapport à son homologue inopérant et définissant de ce fait une autre plage de réception dans laquelle sa trace sur le profilé (drageoir) entrerait, elle, parfaitement dans le champ des moyens de réception optique. Autrement dit, les différents faisceaux lumineux définissent, en relation avec la profondeur de champ des moyens de réception optique, différentes plages de relevé qui, se juxtaposant, s'additionnent pour définir une plage globale de relevé beaucoup plus étendue qu'une seule de ces plages prises isolément. Lors du balayage du profilé, les faisceaux lumineux sont activés alternativement de telle sorte que la trace du faisceau lumineux actif soit bien située dans le champ des moyens de réception optique. Ce choix offert par les moyens émetteurs entre plusieurs faisceaux réalisant ainsi, artificiellement, une démultiplication de la profondeur de champ, il est donc possible d'utiliser des moyens de réception optique à profondeur de champ réduite, mais à précision élevée, sans système optique coûteux et délicat à mettre en oeuvre.

Sous un second aspect, le choix offert par les moyens émetteurs entre plusieurs faisceaux lumineux permet de surmonter les difficultés de réception résultant de la diversité des formes et matériaux des montures (ou d'autres profilés). En effet, il est possible à chaque capture d'image, de changer de faisceau lumineux actif dès lors que le relevé est impossible ou imprécis avec le faisceau lumineux initialement actif. On comprend en effet que les problèmes mentionnés précédemment, tenant aux difficultés ou impossibilités de réception d'image ou même d'éclairage du profilé en une zone particulière du profilé, ne se posent que dans une configuration géométrique relative précise du faisceau lumineux et des moyens de réception optique par rapport à la zone considérée du profilé. Par conséquent, les difficultés de réception ou d'éclairage qui se posent avec un faisceau lumineux déterminé, ne se poseront généralement pas, avec un autre faisceau lumineux de configuration géométrique distincte. C'est pourquoi l'alternance entre plusieurs faisceaux lumineux permettra, dans la plupart des cas, de pallier la difficulté de réception ou d'éclairage rencontrée.

Pour une meilleure précision de relevé, il est préférable de prévoir un angle de pointage supérieur à 45 degrés. En pratique, un angle de pointage d'environ 70 degrés constituera un bon compromis pour une précision de relevé élevée et efficace dans la plupart des configurations.

Plusieurs caractéristiques additionnelles avantageuses sont prévues selon l'invention pour concourir à l'obtention de l'un et/ou l'autre des deux effets techniques développés ci-dessus.

En particulier, pour augmenter artificiellement la profondeur de champ des moyens de réception optique, on pourra prévoir que la pluralité de faisceaux lumineux comporte au moins une série d'au moins deux faisceaux lumineux juxtaposés, sensiblement parallèles entre eux. En pratique, on obtiendra satisfaction pour la lecture de la plupart des drageoirs de montures avec un nombre de faisceaux lumineux juxtaposés compris entre trois et huit pour la ou chaque série.

Ainsi, au cours du balayage du profilé, et dès lors que la profondeur de champ des moyens de réception optique est réduite au bénéfice de la précision de relevé, il peut arriver que la trace du faisceau lumineux actif sorte du champ de réception. Dans ce cas, il suffit de désactiver ce faisceau lumineux et d'activer le faisceau lumineux adjacent qui, du fait de son décalage par rapport au faisceau initial, couvre une plage de réception décalée par rapport à celle couverte par le faisceau initialement actif et éclaire de ce fait le profilé (drageoir) suivant une trace qui, elle, est située dans le champ de réception des moyens de réception optique. Ainsi, suivant l'éloignement de la zone considérée du profilé (drageoir) vis-à-vis des moyens de réception optique (et plus précisément de l'axe de rotation de la tête de lecture), on choisira d'activer celui des faisceaux lumineux juxtaposés parallèles couvrant la plage de réception correspondant à cet éloignement et dont la trace entre dans le champ de réception des moyens de réception optique. Comme exposé précédemment, on augmente ainsi artificiellement la profondeur du champ de réception, en créant entre chaque faisceau lumineux juxtaposé parallèle, des plages de relevé correspondant à un certain intervalle d'éloignement du profilé vis-à-vis des moyens de réception optique. Autrement dit, la profondeur de champ nécessaire à la lecture d'un profilé dans une plage globale se trouve divisée par le nombre de faisceaux lumineux juxtaposés parallèles, la plage globale de réception nécessaire étant morcelée en autant de plages de relevé réduites, associées aux différents faisceaux juxtaposés parallèles.

En alternative ou en combinaison avec la pluralité de faisceaux lumineux juxtaposés, on pourra prévoir, pour surmonter les difficultés de réception résultant de la diversité des formes et matériaux des montures en telle ou telle zone du drageoir du cercle de monture ou plus généralement du profilé considéré, que la pluralité de faisceaux lumineux comporte au moins deux faisceaux lumineux formant entre eux un angle supérieur à 20 degrés.

Ainsi, une zone donnée du profilé (ou drageoir) peut-elle être éclairée alternativement par l'un ou l'autre de ces deux faisceaux suivant deux angles d'incidence distincts. Dès lors, si l'éclairage d'une zone donnée du profilé par l'un des faisceaux lumineux ne permet pas, pour l'une quelconque des raisons développées précédemment, d'effectuer un relevé satisfaisant, ce faisceau est désactivé au profit de l'autre faisceau angulairement décalé, de manière à éclairer la zone considérée du profilé sous un autre angle ayant une probabilité très forte de permettre un relevé satisfaisant, ou tout au moins meilleur qu'avec le premier faisceau. De même, lorsque dans une zone particulière du profilé, et plus spécifiquement du drageoir d'un cercle de monture, le faisceau lumineux est réfléchi par un insert métallique noyé dans une matière plastique translucide pour provoquer une réflexion anormale de ce faisceau empêchant tout relevé précis de sa trace, il suffit ici encore de désactiver le faisceau rencontrant l'insert métallique et d'activer l'autre faisceau angulairement décalé. Ce dernier, éclairant le profilé sous un autre angle, ne rencontrera pas l'insert métallique et la réflexion parasite contre cet insert sera donc évitée pour permettre un relevé dans des conditions normales.

Dans une configuration avantageuse, la pluralité de faisceaux lumineux comporte au moins une paire de faisceaux lumineux symétriques l'un de l'autre de part et d'autre d'un plan médian de relevé contenant l'axe optique de pointage. Ainsi, dans le cas où le cercle de monture à mesurer étant de forme oblongue, le faisceau initialement actif n'éclaire plus le drageoir du côté intérieur du cercle, mais éclaire au contraire l'extérieur du cercle, il suffit d'activer le faisceau symétrique qui, situé du côté intérieur du cercle, éclairera convenablement le drageoir. On peut ainsi en particulier prévoir que chacun des deux faisceaux symétriques forme avec l'axe optique de pointage un angle de pointage d'environ 70 degrés permettant d'obtenir un maximum de précision et d'efficacité de relevé.

Dans un mode de réalisation préféré, combinant les choix entre plusieurs faisceaux lumineux juxtaposés parallèles et plusieurs faisceaux lumineux angulairement décalés, on pourra prévoir que la pluralité de faisceaux lumineux comporte une première série d'au moins deux faisceaux lumineux juxtaposés et parallèles entre eux et une seconde série d'au moins deux faisceaux lumineux juxtaposés et parallèles, les faisceaux de ces deux séries étant symétriques deux à deux par rapport au plan médian de relevé.

Dans un mode de réalisation avantageux, chaque faisceau lumineux plan est issu d'un faisceau lumineux cohérent rectiligne sur la trajectoire duquel est disposée une lentille d'étalement provoquant la divergence de ce faisceau lumineux cohérent rectiligne dans le plan souhaité transversal au drageoir.

Plus précisément, chaque faisceau lumineux cohérent rectiligne est émis par une source laser propre qui est disposée verticalement, parallèlement à l'axe de rotation de la tête de lecture, un miroir de renvoi oblique étant interposé sur la trajectoire du faisceau lumineux cohérent rectiligne, en amont de la lentille d'étalement, pour réorienter la trajectoire du faisceau lumineux cohérent rectiligne, et partant, celle du faisceau lumineux plan divergent qui en résulte en direction du drageoir du cercle de monture porté par le support. Cette disposition verticale des sources laser permet de réduire considérablement l'encombrement radial, c'est-à-dire suivant une direction perpendiculaire à son axe de rotation, de la tête de lecture.

De même, pour réduire l'encombrement axial de la tête de lecture, les moyens de réception optique comportent un capteur optique matriciel et un objectif associé disposés tous deux suivant un axe optique commun, au moins un miroir de renvoi étant disposé obliquement sur cet axe optique pour réorienter ce dernier suivant un cheminement en ligne brisée dont la branche finale forme l'axe optique de pointage souhaité.

Par exemple, l'axe optique est oblique par rapport à l'axe de rotation de la tête de lecture et les miroirs de renvoi, au moins au nombre de deux, sont disposés de part et d'autre de l'axe de la tête de lecture pour réorienter l'axe optique suivant un cheminement en zigzag à au moins trois branches.

Enfin, pour une lecture rapide et commode des deux cercles d'une même monture, ou pourra prévoir que la tête de lecture soit montée rotative sur un chariot qui peut coulisser par rapport au support de monture entre deux positions de lecture dans lesquelles la tête de lecture se trouve en regard alternativement de l'un ou de l'autre des deux cercles de la monture.

D'autre part, les différents matériaux (métal, plastique opaque ou translucide, etc...) constitutifs des montures possédant des propriétés optiques très différentes, en particulier quant à leurs caractéristiques de réflectivité, on pourra avantageusement prévoir que la puissance des faisceaux lumineux est régulée en fonction du flux lumineux reçu par les moyens de réception optique pour maintenir ce flux à un niveau sensiblement constant adapté aux capacités des moyens de réception pour une précision de relevé satisfaisante quel que soit le type de monture.

Enfin, pour la lecture de la forme du bord extérieur d'un gabarit de verre, on pourra avantageusement prévoir que le dispositif comporte des moyens supplémentaires de support d'un gabarit agencés pour tourner par rapport à la tête de lecture, autour d'un axe, parallèle à l'axe de la tête de lecture, sous l'effet de moyens d'entraînement associés, de manière à faire défiler le bord extérieur de ce gabarit en regard des moyens émetteurs et des moyens de réception optiques, tandis que la tête de lecture est maintenue fixe dans une position angulaire déterminée.

D'autres caractéristiques et avantages de l'invention apparaîtront à la lecture de la description qui suit d'un mode de réalisation particulier donné à titre d'exemple non limitatif. Il sera fait référence aux dessins en annexe, parmi lesquels :
- la figure 1 est une vue en perspective d'ensemble du dispositif de lecture optique selon l'invention,
- la figure 2 est une vue partielle en perspective de la tête de lecture seule, avec une représentation en transparence de son boîtier,
- la figure 3 est une vue partielle en plan, de dessus, de l'intérieur de la tête de lecture seule, avec une représentation en transparence de son boîtier,
- la figure 4 est une vue partielle en coupe axiale de la tête de lecture seule,
- la figure 5 est une vue analogue à la figure 1, illustrant une variante de réalisation du dispositif selon l'invention comportant des moyens spécifiques pour la lecture du bord extérieur d'un gabarit de verre.

Le dispositif de lecture optique donné en exemple, en référence à ces figures, est spécialement conçu pour réaliser la lecture optique sans contact de la forme tridimensionnelle du bord intérieur, dit drageoir D, d'un cercle C d'une monture M de lunettes.

On conçoit cependant aisément que les moyens essentiels de ce dispositif pourront être transposés à d'autres applications similaires en vue de réaliser, de manière générale, la lecture optique sans contact d'un profilé quelconque, en particulier, mais non exclusivement, d'un profilé fermé.

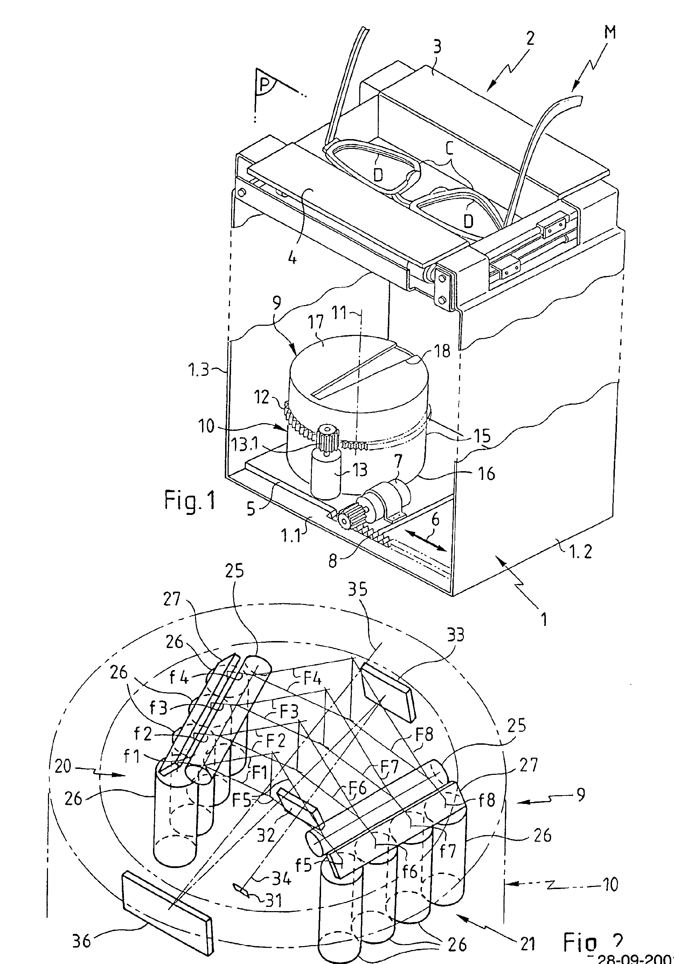

En référence plus particulièrement aux figures 1 et 2, le dispositif de lecture optique sans contact selon l'invention comporte un châssis 1 présentant un profil en forme générale de U et comportant une embase 1.1 et deux parois latérales 1.2, 1.3 au sommet desquelles est rapporté un support 2 pour une monture M. Ce support 2 surplombe l'embase 1.1 et comporte principalement deux mâchoires 3, 4 agencées pour pincer sur leur tranche les deux cercles C de la monture M suivant un plan vertical de calage P perpendiculaire aux parois latérales 1.2, 1.3.

Une tête de lecture 9 est montée mobile sur l'embase 1.1 du châssis 1. Plus précisément, la tête de lecture 9 présente un corps ou boîtier 10 en forme générale de cylindre d'axe 11, qui est monté sur un chariot coulissant 5 pour tourner autour de son axe 11 disposé verticalement. Pour son entraînement en rotation le boîtier 10 est relié, au moyen d'une crémaillère circulaire 12 ménagée sur sa périphérie, au pignon d'entraînement 13.1 d'un moteur-codeur 13 dont le corps est fixé sur le chariot 5. Ce moteur-codeur 13 commande ainsi la rotation du boîtier 10 de la tête de lecture 9 autour de son axe 11 et, simultanément, capte sa position angulaire autour de cet axe par rapport au chariot 5 et donc à l'embase 1.

Le chariot 5 est monté sur l'embase 1.1 du châssis 1 pour coulisser suivant une direction de coulissement 6 parallèle au plan vertical de calage P du support 2 de monture, entre deux positions de lecture dans lesquelles la tête de lecture 9 se trouve à l'aplomb de l'un ou l'autre des deux cercles C de la monture M. Pour son entraînement en translation sur l'embase 1.1, le chariot 5 est pourvu d'un moteur 7 dont le corps est fixé sur le chariot 5 et dont l'arbre est pourvu d'un pignon engrenant avec une crémaillère rectiligne 8 associée à l'embase 1.1.

Dans ses deux positions de lecture, le chariot 5 vient en butée par exemple contre les deux parois verticales 1.2, 1.3 du châssis 1. On pourrait toutefois, bien entendu, prévoir d'autres types de butées physiques ou optiques, éventuellement réglables, permettant d'immobiliser le chariot 5 dans chacune de ses deux positions. Une solution alternative pourrait également consister à utiliser un moteur 7 intégrant une fonction de codage lui permettant de délivrer un signal électrique représentatif de la position du chariot 5 de manière à piloter de manière automatisée la translation du chariot 5 avec un décalage correspondant à l'écartement existant entre les centres des deux cercles C de monture.

Le boîtier cylindrique 10 de la tête de lecture 9 se compose d'une paroi latérale cylindrique 15 fermée, à ses deux extrémités, par une paroi inférieure 16 et une paroi supérieure 17 planes. La paroi supérieure 17 présente une fente de relevé 18 de forme générale trapézoïdale, dont la fonction sera mieux expliquée ultérieurement.

A l'intérieur de son boîtier cylindrique 10, la tête de lecture 9 comporte des moyens émetteurs 20, 21 aptes à projeter une pluralité de faisceaux lumineux plans F1 à F8 orientés pour couper transversalement le drageoir D du cercle C de la monture M.

En l'espèce, les moyens émetteurs se divisent en deux parties 20 et 21 qui sont chacune aptes à émettre une pluralité de faisceaux lumineux juxtaposés et parallèles entre eux. Plus précisément, la première partie 20 des moyens émetteurs est apte à émettre quatre faisceaux lumineux F1 à F4 juxtaposés et parallèles entre eux, tandis que la seconde partie 21 des moyens émetteurs est apte à émettre quatre faisceaux lumineux F5 à F8 juxtaposés et parallèles entre eux.

Les faisceaux lumineux de ces deux séries, F1 à F4 d'une part et F5 à F8 d'autre part, sont symétriques deux à deux par rapport à un plan médian de relevé 22 contenant l'axe 11 de la tête de lecture 9. Ainsi, le faisceau F5 émis par la seconde partie 21 des moyens émetteurs est-il symétrique, par rapport au plan 22, du faisceau F1 émis par la première partie 20 de ces moyens émetteurs. De même, le faisceau F6 est symétrique du faisceau F2, le faisceau F7 du faisceau F3 et le faisceau F8 du faisceau F4.

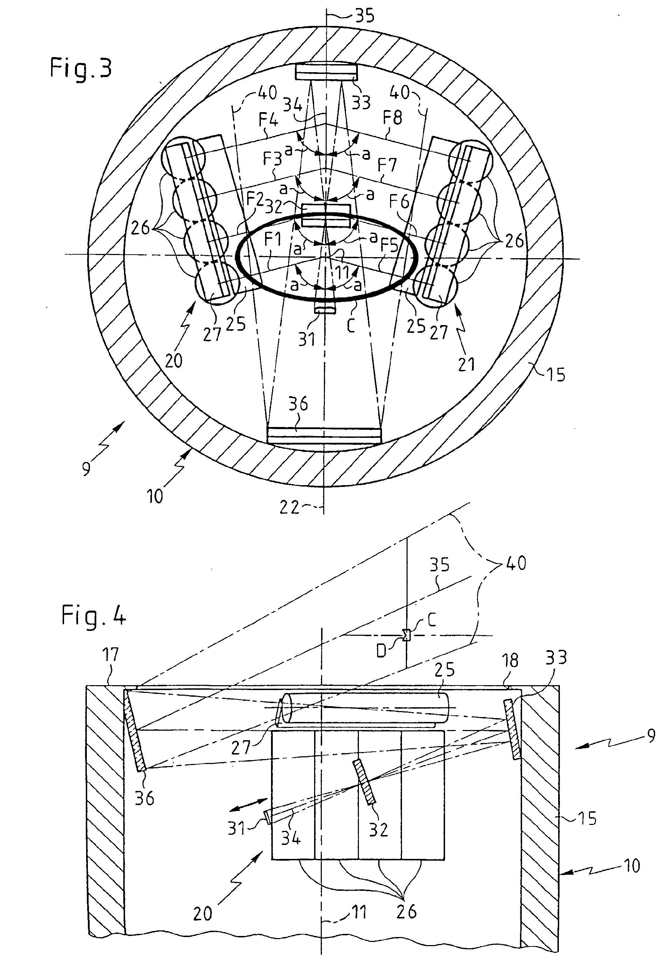

A la figure 3, on a noté a l'angle, dit ci-après angle de pointage, formé entre chacun des faisceaux lumineux F1 à F8 et le plan médian 22. On constate bien entendu, du fait du parallélisme entre les faisceaux de chaque série et de la symétrie entre les deux séries de faisceaux, que tous les faisceaux F1 à F8 forment le même angle a avec le plan médian 22.

Pour obtenir une bonne précision de relevé, comme expliqué ci-après, il est préférable de prévoir que l'angle de pointage a soit supérieur à 45 degrés. Plus précisément, un calcul d'optimisation et des essais ont permis de déterminer un angle de pointage optimum pour obtenir à la fois précision et efficacité dans le relevé du drageoir D. Cet angle optimum, adopté pour l'exemple illustré aux figures, est d'environ 70 degrés ; mais il pourra être compris entre 60 et 80 degrés.

Chaque faisceau lumineux plan F1 à F8 est en pratique issu d'un faisceau lumineux cohérent rectiligne f1 à f8 sur la trajectoire duquel est disposée une lentille cylindrique d'étalement 25 provoquant la divergence de ce faisceau lumineux cohérent rectiligne f1 à f8 dans le plan souhaité transversal au drageoir D.

Plus précisément, chaque faisceau lumineux cohérent rectiligne f1 à f8 est émis par une source laser 26 qui lui est propre et qui est disposée parallèlement à l'axe 11 de la tête de lecture 9, c'est-à-dire verticalement. Un miroir de renvoi oblique 27 est interposé sur la trajectoire de chaque faisceau lumineux cohérent rectiligne f1 à f8, en amont de la lentille d'étalement 25, pour réorienter la trajectoire du faisceau lumineux cohérent rectiligne concerné, et, partant, celle du faisceau lumineux plan divergent F1 à F8 qui en résulte en direction du drageoir D du cercle C de la monture M porté par le support 2.

En l'espèce, chacune des deux parties 20 et 21 des moyens émetteurs possède un miroir de renvoi unique 27 en forme de rectangle fortement allongé disposé sur la trajectoire des quatre faisceaux lumineux cohérents rectilignes f1 à f4, ainsi qu'une lentille d'étalement unique en forme de barreau cylindrique allongé 25 dont sont issus les quatre faisceaux lumineux plans divergents F1 à F 4. De même, la seconde partie 21 des moyens émetteurs comporte un miroir de renvoi 27 unique et une lentille d'étalement 25 unique identiques à ceux de la première partie 20 des moyens émetteurs.

Le boîtier 10 de la tête de lecture 9 renferme par ailleurs des moyens de réception optique comportant un capteur optique matriciel 31, un objectif associé 32 et des miroirs de renvoi, ici au nombre de deux référencés en 33, 36. Le capteur 31 et l'objectif associé 32 sont disposés suivant un axe optique 34 oblique par rapport à l'axe 11 de la tête de lecture 9. Les miroirs de renvoi 33, 36 sont disposés contre la face intérieure de la paroi latérale cylindrique 15 du boîtier 10, de part et d'autre de l'axe 11, obliquement sur l'axe optique 34, pour réorienter ce dernier suivant un cheminement formant une ligne brisée en zigzag à trois branches, c'est-à-dire en Z, dont la dernière branche forme un axe optique final de pointage 35 des moyens de réception situé, comme l'axe optique 34, dans le plan médian de relevé 22 et orienté obliquement dans ce plan.

Dans un souci de compacité en hauteur, c'est-à-dire suivant l'axe 11 de la tête de lecture, il est prévu, dans l'exemple illustré, que l'axe optique 34 forme avec l'axe 11 un angle proche de l'angle droit. Pour augmenter encore cette compacité, on pourra prévoir d'augmenter l'angle que forme l'axe optique 34 par rapport à l'axe 11 tout en disposant un ou plusieurs miroirs de renvoi supplémentaires pour un cheminement en zigzag de l'axe optique à quatre branches ou plus.

Le capteur optique matriciel 31 peut avantageusement être constitué par un capteur de type CMOS qui présente, par rapport à un capteur traditionnel de type CCD, le double avantage d'être meilleur marché et plus rapide dans son processus de capture d'image.

Comme illustré par la double flèche de la figure 4, le capteur optique 31 est mobile suivant l'axe optique 34 sous l'effet d'un moyen de réglage (non illustré sur les figures) permettant une mise au point des moyens de réception optique. En variante, on pourra inversement prévoir que, le capteur 31 étant fixe, la mise au point des moyens de réception optique soit assurée par une mobilité suivant l'axe optique 34 de l'objectif 32.

L'axe optique de pointage 35 et l'orientation générale de chacun des faisceaux lumineux F1 à F8 étant obliques, les faisceaux lumineux plans F1 à F8 et l'axe optique de pointage des moyens de réception optique traversent obliquement la fente de relevé 18 ménagée dans la paroi supérieure 17 du boîtier 10 de la tête de lecture 9 pour venir frapper le drageoir D du cercle C de la monture M.

Le dispositif de lecture comporte enfin une unité centrale de pilotage et de calcul (non représentée aux figures) chargée d'une part de mémoriser et traiter les différentes données de relevé pour chaque position de relevé de la tête de lecture 9, à savoir l'image relevée par le capteur 31, l'identité du faisceau F1 à F8 actif et la position angulaire de la tête de lecture 9 par rapport à l'embase 1 (et donc par rapport au support 2 de monture), et d'autre part de piloter la rotation de la tête de lecture 9 ainsi que l'activation des faisceaux lumineux F1 à F8.

En service, il est procédé de la manière suivante.

Les cercles C de monture dont les drageoirs D doivent être lus sont positionnés et fixés sur le support 2 en étant pris en étau entre les mâchoires 3, 4, de telle manière que leurs axes centraux soient approximativement contenus dans le plan de calage P contenant l'axe 11 de la tête de lecture 9. La position de la tête de lecture 9 est ajustée grâce à la mobilité du chariot coulissant 5 de manière que la tête de lecture 9 vienne à l'aplomb de l'un des deux cercles C, avec son axe 11 approximativement confondu avec l'axe central du cercle C concerné, cette configuration correspondant à la première position du chariot 5. La lecture de ce cercle C peut alors débuter.

Les sources laser 26 sont alimentées successivement par l'unité centrale de pilotage de manière à activer successivement les faisceaux plans F1 à F8 jusqu'à ce que la trace de l'un d'eux sur le drageoir D puisse être lue par les moyens de réception optique, c'est-à-dire jusqu'à ce que cette trace soit située dans le champ des moyens de réception optique matérialisé par les traits mixtes 40 des figures 3 et 4. Dans la configuration illustrée par la figure 3, par exemple, on constate que seuls les faisceaux symétriques F2 et F6 éclairent le drageoir D du cercle C à l'intérieur du champ 40 des moyens de réception optique. Les autres faisceaux lumineux, soit n'éclairent pas du tout le cercle C de monture, soit éclairent ce dernier dans une zone qui se trouve en dehors du champ 40 des moyens de réception optique.

Par conséquent, si les faisceaux F1 à F8 sont activés dans l'ordre de leur indice de référence, l'unité centrale de pilotage arrêtera la séquence d'éclairage sur le faisceau F2 qui est le premier faisceau dont la trace sur le drageoir D du cercle C de monture est située à l'intérieur du champ 40 des moyens de réception optique.

Si toutefois la trace du faisceau F2 sur le drageoir D n'est pas lisible par les moyens de réception optique ou ne l'est qu'insuffisamment en raison d'une configuration optique particulière telle que l'une de celles mentionnées précédemment, par exemple dans l'hypothèse où le faisceau F2 éclaire un insert métallique noyé dans une résine translucide constitutive du cercle C de la monture, l'unité centrale de pilotage désactivera ce faisceau F2 et activera le faisceau F6 symétrique du faisceau F2 pour éclairer le drageoir D du cercle C de monture sous un angle différent permettant d'échapper à l'insert métallique perturbant le relevé.

Le relevé de la trace du faisceau ainsi choisi sur le drageoir D est mémorisé par l'unité centrale qui, en fonction des paramètres de position du faisceau à activer et de la position angulaire de la tête de lecture 9 délivrée par le moteur-codeur 13, détermine par un calcul de triangulation classique, tel que ceux décrits dans les documents :
- "Applications des lasers, R. Farcy- p153-163 ; Edition Masson 1993",
- "A perspective, on range finding techniques for computer vision", R.A. Jarvis, IEEE transactions on pattern analysis and machine intelligence, Vol. PAMI-5, n° 2 mars 1983, la définition géométrique tridimensionnelle de la section concernée du drageoir D.

L'unité centrale pilote ensuite le moteur-codeur 13 de manière à faire tourner la tête de lecture 9 autour de son axe 11 d'un certain angle d'incrémentation. Selon le cas de figure, la trace du faisceau lumineux initialement activé peut rester dans le champ 40 des moyens de réception optique ou au contraire en sortir.

Si la trace du faisceau initialement activé reste dans le champ 40 des moyens de réception optique, le faisceau en question reste actif et un nouveau calcul est effectué par l'unité centrale pour déterminer la définition géométrique tridimensionnelle de la nouvelle section concernée et du drageoir D en fonction de la nouvelle position angulaire de la tête de lecture 9.

Si au contraire la trace du faisceau lumineux initialement actif sort du champ 40 des moyens de réception optique, l'unité centrale désactive le faisceau lumineux concerné et active un autre faisceau lumineux dont la trace sur le drageoir D sera, elle, située dans le champ 40 des moyens de réception optique. Le choix du nouveau faisceau lumineux à activer est effectué par l'unité centrale. Cela peut être fait comme précédemment par une procédure d'activation séquentielle des faisceaux F1 à F8 dans un ordre prédéterminé jusqu'à ce que la trace de l'un de ces faisceaux entre dans le champ 40 des moyens de réception optique.

Toutefois, pour accélérer le déroulement du procédé de lecture dans son ensemble, il pourra être intéressant que l'unité centrale opère ce choix en détectant le sens de progression de la trace du faisceau lumineux initialement actif avant qu'il ne sorte du champ 40 des moyens de réception optique, pour en déduire, par hypothèse de continuité du drageoir, le faisceau lumineux adjacent dont la trace entrera le plus probablement dans le champ 40 des moyens de réception optique. Ainsi, par exemple, si comme dans l'hypothèse précédemment envisagée, le faisceau initialement actif est le faisceau F2 appartenant à la série de faisceaux émis par la première partie 20 des moyens émetteurs, et si la trace de ce faisceau F2 se déplace, vu par les moyens de réception optique, sur la droite dans la configuration de l'exemple illustré par la figure 3, cela signifie que la trace de ce faisceau F2 sur le drageoir D s'éloigne du miroir de renvoi 36 des moyens de réception optique. Il convient alors d'activer le faisceau lumineux suivant dans l'ordre d'éloignement des faisceaux par rapport à ce miroir de renvoi 34, à savoir le faisceau F3 qui définit, avec le champ 40 des moyens de réception optique, une plage de réception plus éloignée que celle définie par le faisceau initial F2.

Comme précédemment, dans l'hypothèse où la trace du faisceau ainsi choisi sur le drageoir D est illisible ou difficilement lisible par les moyens de réception optique pour une raison quelconque de perturbation optique telle que la présence d'un insert métallique dans la section considérée du cercle C de monture, l'unité centrale désactive le faisceau ainsi choisi et active le faisceau symétrique correspondant de l'autre série. Ainsi, dans l'hypothèse envisagée, le faisceau initialement choisi pour sa plage de réception étant le faisceau F3, l'unité centrale, constatant les réflexions parasites, désactivera le faisceau F3 et activera, pour remplacer ce faisceau, le faisceau symétrique F7 de la seconde partie 21 des moyens émetteurs.

Le faisceau lumineux correct étant ainsi déterminé, l'unité centrale mémorise le relevé de la trace du faisceau concerné délivrée par le capteur 31 et en déduit par calcul, en fonction des données géométriques relatives au faisceau ainsi activé et de la position angulaire de la tête de lecture 9 délivrée par le moteur-codeur 13, la définition géométrique tridimensionnelle de la section correspondante du drageoir D du cercle C de monture.

D'autre part, les différents matériaux (métal, plastique opaque ou translucide, etc...) constitutifs des montures possédant des propriété optiques très différentes, en particulier quant à leurs caractéristiques de réflectivité, la puissance des faisceaux lumineux est régulée en fonction du flux lumineux reçu par les moyens de réception optique pour maintenir ce flux à un niveau sensiblement constant adapté aux capacités des moyens de réception pour une précision de relevé satisfaisante quel que soit le type de monture.

L'opération de relevé est ainsi répétée en faisant tourner à chaque fois la tête de lecture 9 de l'angle d'incrémentation prédéfini. Après une rotation complète de la tête de lecture, l'unité centrale dispose en mémoire des définitions géométriques des sections du drageoir correspondant aux différentes positions angulaires de la tête de lecture 9 pour lesquelles un relevé de coupe lumineuse a été opéré.

Des fonctions trigonométriques appropriées et connues, comme celles proposées par exemple dans les documents :
- "A perspective, on range finding techniques for computer vision", R.A. Jarvis, IEEE transactions on pattern analysis and machine intelligence, Vol. PAMI-5, n° 2 mars 1983, et
- "System of optical non contact microtopography M. Costa et J. Almeida, Applied Optics Vol.32, n° 25, 1 septembre 93" ou "Light sectioning with large depth and high resolution G. Häusler, W. Heckel, 15 décembre 1988, Vol. 27 n° 4, Applied Optics", permettent de rétablir, à partir des définitions géométriques de ces différentes sections du drageoir, la forme tridimensionnelle de ce drageoir sur toute sa périphérie.

Un étalonnage du dispositif sur une monture calibrée enregistre les corrections permettant de prendre en compte les disparités de fabrication.

L'angle d'incrémentation séparant chaque position de relevé de la tête de lecture 9 résulte d'un compromis entre, d'une part la précision de la définition géométrique du drageoir sur toute sa périphérie qui peut s'avérer insuffisante si l'intervalle entre chaque position de mesure est trop élevé, et d'autre part la rapidité de l'opération de relevé dans son ensemble qui dépend directement du nombre de positions de relevé retenu et qui fait l'objet d'une forte exigence de la part des professionnels (la tête de lecture disposant de préférence de moins de 10 secondes pour parcourir le drageoir). Le calcul et l'expérimentation pratique ont permis d'évaluer qu'un nombre de positions de relevé compris entre 600 et 1000 donnera généralement satisfaction. En pratique, on pourra par exemple retenir un nombre de positions de relevé d'environ 800 correspondant à un angle d'incrémentation d'environ 0,45 degré.

La lecture du premier cercle C de la monture M étant ainsi achevée, il suffit de piloter, via l'unité centrale, le moteur 7 pour faire coulisser le chariot 5 vers sa seconde position dans laquelle la tête de lecture 9 vient à l'aplomb du second cercle C de la monture M, avec son axe 11 approximativement confondu avec l'axe central de ce second cercle C. La lecture optique du drageoir D du second cercle C peut alors être effectuée comme précédemment indiqué pour le premier cercle C.

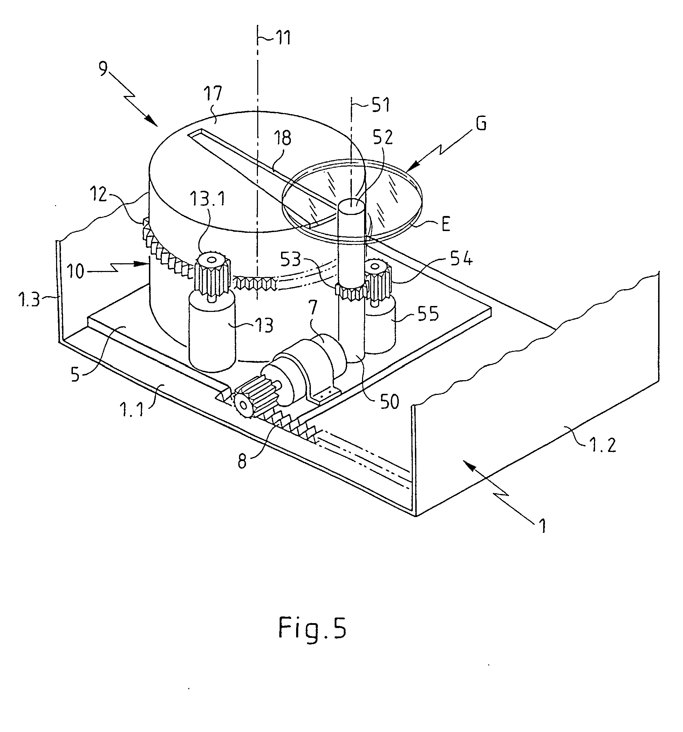

La figure 5 illustre une variante de réalisation du dispositif de lecture selon l'invention. Ce dispositif comporte les mêmes composants principaux, désignés avec les mêmes références numériques, que celui précédemment décrit en référence aux figures 1 à 4 (châssis 1, chariot coulissant 5 et tête de lecture 9), et comporte de plus des moyens de support spécifiques permettant la lecture du bord extérieur E d'un gabarit G de verre.

Ces moyens spécifiques comportent une colonne de support 50 d'axe vertical 51 parallèle à l'axe 11 de la tête de lecture 9. Cette colonne 50 possède à son sommet une face supérieure 52 située légèrement au-dessus de la face supérieure 17 de la tête de lecture 9 et apte à recevoir en appui le gabarit G à lire.

Cette face supérieure 52 est pourvue de moyens de fixation du gabarit G, tels que des moyens d'aspiration ou de ventouse, assurant une fixation temporaire du gabarit G, avec notamment une immobilisation en rotation, par friction, du gabarit G par rapport à la colonne 50. Toutefois, on pourra prévoir tout autre moyen de fixation du gabarit G sur le sommet de la colonne 50, comme par exemple une fixation au moyen d'une simple pastille adhésive.

La colonne 50 est adjacente à la tête de lecture 9, de sorte que, lorsque le gabarit G est rapporté sur sa face supérieure 52, au moins une partie de la périphérie de ce gabarit G s'étend à l'aplomb de la face supérieure 17 de la tête de lecture 9.

La colonne 50 est montée sur le chariot 5 pour tourner autour de son axe 51. Pour son entraînement en rotation, elle est pourvue d'une bague dentée 53 qui engrène avec un pignon 54 associé à l'arbre d'un moteur d'entraînement 55 dont le corps est monté fixe sur le chariot 5.

Pour lire la forme tridimensionnelle du bord extérieur E du gabarit G ainsi porté par la colonne 50, il est procédé de la manière suivante.

La tête de lecture 9 est placée dans la position angulaire illustrée par la figure 5, dans laquelle la fente de relevé 18 s'étend sensiblement dans le plan contenant les axes 11 et 51 qui correspond en l'espèce au plan de calage P précédemment défini en référence à la figure 1.

La tête de lecture est maintenue dans une position angulaire pendant tout le cours de l'opération de lecture et, à la différence du mode de réalisation précédemment décrit, reste donc fixe.

Le balayage du bord extérieur E du gabarit G par les faisceaux lumineux et les relevés de sa coupe lumineuse en une série de positions le long de son pourtour sont obtenus en faisant tourner la colonne de support 50 et, partant, le gabarit G autour de l'axe 51, de manière à faire défiler par incrémentations angulaires successives le bord extérieur E du gabarit G à l'aplomb de la fente de relevé 18 de la tête de lecture 9, en regard des moyens d'émission et de réception. A cet effet, l'unité centrale pilote le moteur 55 d'entraînement de la colonne 50 pour faire tourner pas à pas le gabarit G par rapport à la tête de lecture 9.

## Revendications

1. Procédé de lecture optique sans contact de la forme tridimensionnelle d'un quelconque profilé (D) selon le principe dit de la coupe lumineuse, consistant à :
- balayer le profilé avec un faisceau lumineux plan (F1 à F8) coupant transversalement le profilé (D),
- relever simultanément, sur des moyens de réception optique (31, 32, 33, 36) possédant un axe optique de pointage (35) formant un angle de pointage (a) constant et non nul avec le faisceau lumineux (F1 à F8), en une série de positions le long du profilé (D), la trace de ce faisceau lumineux plan sur le profilé (D) et
- déduire des relevés effectués en ces différentes positions la forme tridimensionnelle du profilé (D),
**caractérisé par le fait que**, à chaque relevé, le faisceau lumineux dont la trace sur le profilé (D) est relevée par les moyens de réception optique (31, 32, 33, 36), est choisi parmi une pluralité de faisceaux lumineux pré-établis (F1 à F8) susceptibles d'être alternativement activés.

2. Procédé selon la revendication 1, dans lequel l'angle de pointage (a) est supérieur à 45 degrés.

3. Procédé selon la revendication 2, dans lequel l'angle de pointage (a) est d'environ 70 degrés.

4. Procédé selon l'une des revendications précédentes, dans lequel la pluralité de faisceaux lumineux (F1 à F8) comporte au moins une série d'au moins deux faisceaux lumineux (F1 à F4 ; F5 à F8) juxtaposés, sensiblement parallèles entre eux.

5. Procédé selon la revendication 4, dans lequel la ou chaque série de faisceaux lumineux juxtaposés (F1 à F4 ; F5 à F8) comporte un nombre de faisceaux lumineux juxtaposés compris entre trois et huit.

6. Procédé selon l'une des revendications précédentes, dans lequel la pluralité de faisceaux lumineux comporte au moins deux faisceaux lumineux formant entre eux un angle supérieur à 20 degrés.

7. Procédé selon la revendication 6, dans lequel la pluralité de faisceaux lumineux comporte au moins une paire (F1, F5 ; F2, F6 ; F3, F7 ; F4, F8) de faisceaux lumineux symétriques l'un de l'autre de part et d'autre d'un plan médian de relevé (22) contenant l'axe optique de pointage.

8. Procédé selon les revendications 4 et 7, dans lequel la pluralité de faisceaux lumineux comporte une première série (F1 à F4) d'au moins deux faisceaux lumineux juxtaposés et parallèles entre eux et une seconde série (F5 à F8) d'au moins deux faisceaux lumineux juxtaposés et parallèles, les faisceaux de ces deux séries étant symétriques deux à deux par rapport au plan médian de relevé (22).

9. Procédé selon la revendication 8, dans lequel les deux séries symétriques de faisceaux lumineux (F1 à F4 . F5 à F8) comportent chacune quatre faisceaux lumineux juxtaposés parallèles.

10. Procédé selon l'une des revendications précédentes, dans lequel la puissance des faisceaux lumineux est régulée en fonction du flux lumineux reçu par les moyens de réception optique pour maintenir ce flux à un niveau sensiblement constant.

11. Procédé selon l'une des revendications précédentes, appliqué au relevé de la forme du bord intérieur, dit drageoir (D), d'un cercle (C) de monture (M) de lunettes.

12. Procédé selon l'une des revendications précédentes, appliqué au relevé de la forme du bord extérieur d'un gabarit (G) de verre de lunettes.

13. Dispositif de lecture optique sans contact de la forme tridimensionnelle du bord intérieur, dit drageoir (D), d'un cercle (C) de monture (M) de lunettes, comportant un support (2) pour le cercle (C) de monture et une tête de lecture (9) qui est rotative par rapport au support (2) autour d'un axe de rotation (11) et à laquelle est associé un capteur (13) de sa position angulaire relative par rapport à ce support, cette tête de lecture comportant d'une part des moyens émetteurs (20, 21) agencés pour projeter un faisceau lumineux plan (F1 à F8) coupant transversalement le drageoir et d'autre part des moyens de réception optique (31, 32, 33, 36) agencés pour relever, quelle que soit la position angulaire relative de la tête de lecture (9) par rapport au support (2) de monture, la trace du faisceau lumineux plan sur le drageoir (D) suivant un axe optique de pointage formant un angle de pointage (a) constant et non nul avec le faisceau lumineux (F1 à F8),
**caractérisé en ce que** les moyens émetteurs (20, 21) sont aptes à projeter au moins deux faisceaux lumineux (F1 à F8) distincts et susceptibles d'être alternativement activés

14. Dispositif selon la revendication 13, dans lequel l'angle de pointage (a) est supérieur à 45 degrés.

15. Dispositif selon la revendication 14, dans lequel l'angle de pointage (a) est d'environ 70 degrés.

16. Dispositif selon l'une des revendications 13 à 15, dans lequel la pluralité de faisceaux lumineux (F1 à F8) comporte au moins une série d'au moins deux faisceaux lumineux (F1 à F4 ; F5 à F8) juxtaposés, sensiblement parallèles entre eux.

17. Dispositif selon la revendication 16, dans lequel la ou chaque série de faisceaux lumineux juxtaposés (F1 à F4 ; F5 à F8) comporte un nombre de faisceaux lumineux juxtaposés compris entre trois et huit

18. Dispositif selon l'une des revendications 13 à 17, dans lequel la pluralité de faisceaux lumineux comporte au moins deux faisceaux lumineux formant entre eux un angle supérieur à 20 degrés.

19. Dispositif selon la revendication 18, dans lequel la pluralité de faisceaux lumineux comporte au moins une paire (F1, F5 ; F2, F6 ; F3, F7 ; F4, F8) de faisceaux lumineux symétriques l'un de l'autre de part et d'autre d'un plan médian de relevé (22) contenant l'axe optique de pointage (35) des moyens de réception optique.

20. Dispositif selon la revendication 19, prise en dépendance de l'une des revendications 15 et 16, dans lequel la pluralité de faisceaux lumineux comporte une première série (F1 à F4) d'au moins deux faisceaux lumineux juxtaposés et parallèles entre eux et une seconde série (F5 à F8) d'au moins deux faisceaux lumineux juxtaposés et parallèles, les faisceaux de ces deux séries étant symétriques deux à deux par rapport au plan médian de relevé (22).

21. Dispositif selon la revendication 20, dans lequel les deux séries symétriques de faisceaux lumineux (F1 à F4 ; F5 à F8) comportent chacune quatre faisceaux lumineux juxtaposés parallèles.

22. Dispositif selon l'une des revendications 13 à 21, dans lequel chaque faisceau lumineux plan (F1 à F8) est issu d'un faisceau lumineux cohérent rectiligne (f1 à f8) sur la trajectoire duquel est disposée une lentille d'étalement (25) provoquant la divergence de ce faisceau lumineux cohérent rectiligne (f1 à f8) dans le plan souhaité transversal au drageoir (D).

23. Dispositif selon la revendication 22, dans lequel chaque faisceau lumineux cohérent rectiligne (f1 à f8) est émis par une source laser propre (26) qui est disposée verticalement, parallèlement à l'axe de rotation (11) de la tête de lecture (9), un miroir de renvoi oblique (27) étant interposé sur la trajectoire du faisceau lumineux cohérent rectiligne (f1 à f8), en amont de la lentille d'étalement (25), pour réorienter la trajectoire du faisceau lumineux cohérent rectiligne (f1 à f8), et partant, celle du faisceau lumineux plan divergent (F1 à F8) qui en résulte en direction du drageoir (D) du cercle (C) de monture (M) porté par le support (2).

24. Dispositif selon la revendication 23, prise en dépendance de l'une des revendications 18 et 19, dans lequel un miroir de renvoi unique (27) et une lentille d'étalement unique (25) en forme de barreau cylindrique sont associés à chacune des deux séries symétriques de faisceaux lumineux juxtaposés (F1 à F4; F5 à F8).

25. Dispositif selon l'une des revendications 13 à 24, dans lequel les moyens de réception optique comportent un capteur optique matriciel (31) et un objectif associé (32) disposés tous deux suivant un axe optique commun (34), au moins un miroir de renvoi (33, 36) étant disposé obliquement sur cet axe optique (34) pour réorienter ce dernier suivant un cheminement dont la branche finale forme l'axe optique de pointage souhaité.

26. Dispositif selon la revendication 25, dans lequel l'axe optique (34) et oblique par rapport à l'axe de rotation (11) de la tête de lecture (9) et les miroirs de renvoi (33, 36), au moins au nombre de deux, sont disposés de part et d'autre de l'axe (11) de la tête de lecture (9) pour réorienter l'axe optique (34) suivant un cheminement en zigzag à au moins trois branches.

27. Dispositif selon l'une des revendications 25 et 26, dans lequel l'un au moins des éléments capteur optique matriciel (31) et objectif associé (32) est mobile suivant l'axe optique (34) sous l'effet de moyens de réglage permettant une mise au point des moyens de réception optique.

28. Dispositif selon la revendication 27, dans lequel seul le capteur optique matriciel (31) est mobile suivant son axe optique.

29. Dispositif selon l'une des revendications 13 à 28, dans lequel l'orientation générale de chacun des faisceaux lumineux plans (F1 à F8) et l'axe optique de pointage sont obliques par rapport à l'axe de rotation (11) de la tête de lecture (9) de telle manière que, les moyens émetteurs (20, 21) et les moyens de réception optique (31, 32, 33, 36) étant logés à l'intérieur de la tête de lecture, en dessous d'une paroi supérieure (17) de cette dernière sensiblement perpendiculaire à son axe de rotation (11), les faisceaux lumineux plans (F1 à F8) et l'axe optique de pointage traversent obliquement une fente de relevé (18) ménagée dans cette paroi.

30. Dispositif selon l'une des revendications 13 à 29, dans lequel des moyens de réception optique comportent un capteur optique matriciel (31) du type CMOS.

31. Dispositif selon l'une des revendications 13 à 30, dans lequel la tête de lecture (9) est montée rotative sur un chariot (5) qui peut coulisser par rapport au support (2) de monture (M) entre deux positions de lecture dans lesquelles la tête de lecture (9) se trouve en regard alternativement de l'un ou de l'autre des deux cercles (C) de la monture (M).

32. Dispositif selon l'une des revendications 13 à 31 , comportant des moyens supplémentaires de support (50) d'un gabarit (G) agencés pour tourner par rapport à la tête de lecture (9), autour d'un axe (51), parallèle à l'axe (11) de la tête de lecture (9), sous l'effet de moyens d'entraînement associés (55), de manière à faire défiler le bord extérieur (E) de ce gabarit (G) en regard des moyens émetteurs (20, 21) et des moyens de réception optiques (31, 32, 33, 36), tandis que la tête de lecture (9) est maintenue fixe dans une position angulaire déterminée.

## Claims

1. An optical non-contact method of reading the three-dimensional shape of any profile (D) in accordance with the luminous section principle, the method consisting of:
- scanning the profile with a plane light beam (F1 to F8) intersecting the profile (D) transversely,
- simultaneously reading the trace of said plane light beam on the profile (D) by means of optical receiver means (31, 32, 33, 36) having an optical pointing axis (35) at a constant non-zero pointing angle
(a) to the light beam (F1 to F8) at a series of positions along the profile (D), and
- deducing the three-dimensional shape of the profile (D) from the readings effected at these various positions,
**characterized in that**, on each reading, the light beam whose trace on the profile (D) is read by the optical receiver means (31, 32, 33, 36) is chosen from a plurality of predefined light beams (F1 to F8) which can be activated alternately.

2. A method according to claim 1, wherein the pointing angle (a) is greater than 45°.

3. A method according to claim 2, wherein the pointing angle (a) is approximately 70°.

4. A method according to any preceding claim, wherein the plurality of light beams (F1 to F8) includes at least one series of at least two substantially parallel juxtaposed light beams (F1 to F4; F5 to F8).

5. A method according to claim 4, wherein the or each series of juxtaposed light beams (F1 to F4; F5 to F8) includes from three to eight juxtaposed light beams.

6. A method according to any preceding claim, wherein the plurality of light beams includes at least two light beams with an angle greater than 20° between them.

7. A method according to claim 6, wherein the plurality of light beams includes at least one pair (F1, F5; F2, F6; F3, F7; F4, F8) of light beams symmetrical to each other on respective opposite sides of a median reading plane (22) containing the optical pointing axis.

8. A method according to claims 4 and 7, wherein the plurality of light beams includes a first series (F1 to F4) of at least two parallel juxtaposed light beams and a second series (F5 to F8) of at least two parallel juxtaposed light beams, the beams of said two series being symmetrical in pairs with respect to the median reading plane (22).

9. A method according to claim 8, wherein the two symmetrical series of light beams (F1 to F4; F5 to F8) each include four parallel juxtaposed light beams.

10. A method according to any preceding claim, wherein the power of the light beams is regulated as a function of the luminous flux received by the optical receiver means to maintain said flux at a substantially constant level.

11. A method according to any preceding claim, applied to reading the shape of the inside edge, referred to as the bezel (D), of a rim (C) of a spectacle frame (M).

12. A method according to any preceding claim, applied to reading the shape of the outside edge of a spectacle lens template (G).

13. An optical non-contact device for reading the three-dimensional shape of the inside edge, referred to as the bezel (D), of a rim (C) of a spectacle frame (M), said device including a support (2) for the frame rim (C) and a read head (9) rotatable relative to the support (2) about a rotation axis (11) and associated with a sensor (13) responsive to its angular position relative to said support, said read head including emitter means (20, 21) adapted to project a plane light beam (F1 to F8) intersecting the bezel transversely and optical receiver means (31, 32, 33, 36) adapted, regardless of the angular position of the read head (9) relative to the frame support (2), to read the trace of the plane light beam on the bezel (D) along an optical pointing axis at a constant non-zero pointing angle (a) to the light beam (F1 to F8), **characterized in that** the emitter means (20, 21) are adapted to project at least two separate light beams (F1 to F8) which can be activated alternatively.

14. A device according to claim 13, wherein the pointing angle (a) is greater than 45°.

15. A device according to claim 14, wherein the pointing angle (a) is approximately 70°.

16. A device according to any of claims 13 to 15, wherein the plurality of light beams (F1 to F8) includes at least one series of at least two substantially parallel juxtaposed light beams (F1 to F4; F5 to F8).

17. A device according to claim 16, wherein the or each series of juxtaposed light beams (F1 to F4; F5 to F8) includes from three to eight juxtaposed light beams.

18. A device according to any of claims 13 to 17, wherein the plurality of light beams includes at least two light beams with an angle greater than 20° between them.

19. A device according to claim 18, wherein the plurality of light beams includes at least one pair (F1, F5; F2, F5 ; F3, F7; F4, F8) of light beams symmetrical to each other on respective opposite sides of a median reading plane (22) containing the optical pointing axis (35) of the optical receiver means.

20. A device according to claim 19 when dependent on claim 15 or claim 16, wherein the plurality of light beams includes a first series (F1 to F4) of at least two parallel juxtaposed light beams and a second series (F5 to F8) of at least two parallel juxtaposed light beams, the beams of said two series being symmetrical in pairs with respect to the median reading plane (22).

21. A device according to claim 20, wherein the two symmetrical series of light beams (F1 to F4; F5 to F8) each include four parallel juxtaposed light beams.

22. A device according to any of claims 13 to 21, wherein each plane light beam (F1 to F8) is derived from a rectilinear coherent light beam (f1 to f8) on whose trajectory is placed a spreader lens (25) causing said rectilinear coherent light beam (f1 to f8) to diverge in the required plane transverse to the bezel (D).

23. A device according to claim 22, wherein each rectilinear coherent light beam (f1 to f8) is emitted by its own laser source (26) disposed vertically, parallel to the rotation axis (11) of the read head (9), and an oblique mirror (27) is placed on the trajectory of the rectilinear coherent light beam (f1 to f8) upstream of the spreader lens (25) to reorient the trajectory of the rectilinear coherent light beam (f1 to f8) and therefore that of the divergent plane light beam (F1, to F8) derived from it toward the bezel (D) of the rim (C) of the frame (M) carried by the support (2).

24. A device according to claim 23, when dependent on either claim 18 or claim 19, wherein a single mirror (27) and a single spreader lens (25) in the form of a cylindrical rod are associated with each of the two symmetrical series of juxtaposed light beams (F1 to F4; F5 to F8).

25. A device according to any of claims 13 to 24, wherein the optical receiver means include a matrix optical sensor (31) and an associated objective lens (32) both placed on a common optical axis (34) and at least one mirror (33, 36) is placed obliquely to said optical axis (34) to reorient it along a path whose final branch forms the required optical pointing axis.

26. A device according to claim 25, wherein the optical axis (34) is oblique to the rotation axis (11) of the read head (9) and at least two mirrors (33, 36) are placed on respective opposite sides of the axis (11) of the read head (9) to reorient the optical axis (34) along a zig-zag path with at least three branches.

27. A device according to either claim 25 or claim 26, wherein the matrix optical sensor (31) and/or the associated objective lens (32) can be moved along the optical axis (34) by adjustment means to focus the optical receiver means.

28. A device according to claim 27, wherein only the matrix optical sensor (31) is mobile along its optical axis.

29. A device according to any of claims 13 to 28, wherein the general orientation of each of the plane light beams (F1 to F8) and the optical pointing axis are oblique to the rotation axis (11) of the read head (9) so that, the emitter means (20, 21) and the optical receiver means (31, 32, 33, 36) being accommodated inside the read head, below a top wall (17) thereof substantially perpendicular to its rotation axis (11), the plane light beams (F1 to F8) and the optical pointing axis pass obliquely through a reading slot (18) in said wall.

30. A device according to any of claims 13 to 29, wherein the optical receiver means include a CMOS matrix optical sensor (31).

31. A device according to any of claims 13 to 30, wherein the read head (9) is rotatably mounted on a carriage (5) that can slide relative to the support (2) for the frame (M) between two reading positions in which the read head (9) alternately faces one or the other of the two rims (C) of the frame (M).

32. A device according to any of claims 13 to 31, including additional support means (50) for a template (G) adapted to be turned relative to the read head (9) about an axis (51) parallel to the axis (11) of the read head (9) by associated drive means (55) to move the outside edge (E) of said template (G) in front of the emitter means (20, 21) and the optical receiver means (31, 32, 33, 36) while the read head (9) is held fixed in a particular angular position.

## Patentansprüche

1. Verfahren zum kontaktlosen optischen Lesen der dreidimensionalen Form eines beliebigen Profils (D) gemäß dem Lichtschnitt genannte Prinzip, umfassend:
- Abtasten des Profils mit einem geraden Lichtstrahl (F1 bis F8), welcher das Profil (D) transversal schneidet,
- gleichzeitiges Aufnehmen der Spur dieses geraden Lichtstrahls an dem Profil (D) in einer Serie von Positionen entlang des Profils (D) an optischen Auf nahmenmitteln (31, 32, 33, 36), welche eine optische Richtachse (35) aufweisen, die einen konstanten Richtwinkel (a) ungleich Null mit dem Lichtstrahl (F1 bis F8) bildet, und
- Ableiten der dreidimensionalen Form des Profils (D) aus den an diesen verschiedenen Positionen ausgeführten Aufnahmen,
**dadurch gekennzeichnet, dass** bei jeder Aufnahme der Lichtstrahl, dessen Spur an dem Profil (D) mittels der optischen Aufnahmenmittel (31, 32, 33, 36) aufgenommen ist, aus einer Vielzahl von vorab bereitgestellten Lichtstrahlen (F1 bis F8), die dazu geeignet sind, alternativ aktiviert zu werden, gewählt wird.

2. Verfahren nach Anspruch 1, bei welchem der Richtwinkel (a) größer als 45 Grad ist.

3. Verfahren nach Anspruch 2, bei welchem der Richtwinkel (a) ungefähr 70 Grad beträgt.

4. Verfahren nach einem der vorangehenden Ansprüche, bei welchem die Vielzahl von Lichtstrahlen (F1 bis F8) zumindest eine Serie von zumindest zwei nebeneinander angeordneten Lichtstrahlen (F1 bis F4; F5 bis F8), im Wesentlichen parallel zueinander umfasst.

5. Verfahren nach Anspruch 4, bei welchem die oder jede Serie der nebeneinander angeordneten Lichtstrahlen (F1 bis F4; F5 bis F8) eine Anzahl von nebeneinander angeordneten Lichtstrahlen im Bereich von drei bis acht umfasst.

6. Verfahren nach einem der vorangehenden Ansprüche, bei welchem die Vielzahl von Lichtstrahlen zumindest zwei Lichtstrahlen umfasst, welche zueinander einen Winkel größer als 20 Grad bilden.

7. Verfahren nach Anspruch 6, bei welchem die Vielzahl von Lichtstrahlen zumindest ein Paar von Lichtstrahlen (F1, F5; F2, F6; F3, F7; F4, F8) umfasst, welche zueinander beiderseits einer Aufnahme-Mittelebene (22), welche die optische Richtachse umfasst, symmetrisch sind.

8. Verfahren nach den Ansprüchen 4 und 7, bei welchem die Vielzahl von Lichtstrahlen eine erste Serie (F1 bis F4) von zumindest zwei nebeneinander angeordneten und zueinander parallelen Lichtstrahlen und eine zweite Serie (F5 bis F8) von zumindest zwei nebeneinander angeordneten und parallelen Lichtstrahlen umfasst, wobei die Strahlen dieser zwei Serien paarweise symmetrisch bezüglich der Aufnahme-Mittelebene (22) sind.

9. Verfahren nach Anspruch 8, bei welchem die zwei symmetrischen Serien von Lichtstrahlen (F1 bis F4; F5 bis F8) jeweils vier nebeneinander angeordnete parallele Lichtstrahlen umfassen.

10. Verfahren nach einem der vorangehenden Ansprüche, bei welchem die Stärke des Lichtstrahls in Abhängigkeit des durch die optischen Aufnahmemittel empfangenen Lichtstroms geregelt wird, um diesen Fluss auf einem im Wesentlichen konstanten Niveau zu halten.

11. Verfahren nach einem der vorangehenden Ansprüche, angewandt auf das Aufnehmen der Form des inneren Randes, bezeichnet als Glashalterung (D) einer Fassung (C) eines Brillengestells (M).

12. Verfahren nach einem der vorangehenden Ansprüche, angewandt auf das Aufnehmen der Form des äußeren Randes eines Umrisses (G) eines Brillenglases.

13. Vorrichtung zum kontaktlosen optischen Lesen der dreidimensionalen Form des inneren Randes, bezeichnet als Glashalterung (D) einer Fassung (C) eines Brillengestells (M), umfassend einen Träger (2) für die Fassung (C) des Gestells und einen Lesekopf (9), welcher drehbar bezüglich des Trägers (2) um eine Drehachse (11) ist und welchem ein Sensor (13) für seine Winkelposition bezüglich dieses Trägers zugeordnet ist, wobei der Lesekopf einerseits Aussendemittel (20, 21) umfasst, welche so angeordnet sind, dass sie einen geraden Lichtstrahl (F1 bis F8) projizieren, welcher transversal die Glashalterung schneidet, und andererseits optische Aufnahmemittel (31, 32, 33, 36) umfasst, welche so angeordnet sind, dass sie bei jeder relativen Winkelposition des Lesekopfs (9) bezüglich des Trägers (2) des Gestells die Spur des geraden Lichtstrahls an der Glashalterung (D) entlang einer optischen Richtachse aufnehmen, welche einen konstanten Richtwinkel (2) ungleich Null mit dem Lichtstrahl (F1 bis F8) bildet, **dadurch** gekenntzeichnet, dass die Aussendemittel (20, 21) dazu ausgelegt sind, zumindest zwei distinkte Lichtstrahlen (F1 bis F8) zu projizieren und dazu geeignete sind alternativ aktiviert zu werden.

14. Vorrichtung nach Anspruch 13, bei welcher der Richtwinkel (a) größer als 45 Grad ist.

15. Vorrichtung nach Anspruch 14, bei welcher der Richtwinkel (a) ungefähr 70 Grad beträgt.

16. Vorrichtung nach einem der Ansprüche 13 bis 15, bei welcher die Vielzahl von Lichtstrahlen (F1 bis F8) zumindest eine Serie von zumindest zwei nebeneinander angeordneten Lichtstrahlen (F1 bis F4; F5 bis F8), im Wesentlichen parallel zueinander umfasst.

17. Vorrichtung nach Anspruch 16, bei welcher die oder jede Serie der nebeneinander angeordneten Lichtstrahlen (F1 bis F4; F5 bis F8) eine Anzahl von nebeneinander angeordneten Lichtstrahlen im Bereich von drei bis acht umfasst.

18. Vorrichtung nach einem der Ansprüche 13 bis 17, bei welcher die Vielzahl von Lichtstrahlen zumindest zwei Lichtstrahlen umfasst, welche zueinander einen Winkel größer als 20 Grad bilden.

19. Vorrichtung nach Anspruch 18, bei welcher die Vielzahl von Lichtstrahlen zumindest ein Paar (F1, F5; F2, F6; F3, F7; F4, F8) von Lichtstrahlen umfasst, welcher zueinander beiderseits einer Aufnahme-Mittelebene (22), welche die optische Richtachse (35) der optischen Aufnahmemittel umfasst, symmetrisch sind.

20. Vorrichtung nach Anspruch 19, in Abhängigkeit von einem der Ansprüche 15 und 16, bei welcher die Vielzahl von Lichtstrahlen eine erste Serie (F1 bis F4) von zumindest zwei nebeneinander angeordneten und zueinander parallelen Lichtstrahlen und eine zweite Serie (F5 bis F8) von zumindest zwei nebeneinander angeordneten und parallelen Lichtstrahlen umfasst, wobei die Strahlen diese zwei Serien paarweise symmetrisch bezüglich der Aufnahme-Mittelebene (22) sind.

21. Vorrichtung nach Anspruch 20, bei welcher die zwei symmetrischen Serien von Lichtstrahlen (F1 bis F4; F5 bis F8) jeweils vier nebeneinander angeordnete parallele Lichtstrahlen umfassen.

22. Vorrichtung nach einem der Ansprüche 13 bis 21, bei welcher jeder gerade Lichtstrahl (F1 bis F8) aus einem geradlinigen kohärenten Lichtstrahl (f1 bis f8) hervorgeht, an dessen Bahn eine Aufweitungslinse (25) angeordnet ist, welche das Divergieren dieses geradlinigen kohärenten Lichtstrahls (f1 bis f8) in die gewünschte Ebene transversal zu der Glashalterung (D) bewirkt.

23. Vorrichtung nach Anspruch 22, bei welcher jeder geradlinige kohärente Lichtstrahl (f1 bis f8) von einer eigenen Laserquelle (26) ausgesendet wird, welche vertikal, parallel zu der Drehachse (11) des Lesekopfes (9) angeordnet ist, wobei ein Spiegel mit schräger Reflexion (27) an der Bahn des geradlinigen kohärenten Lichtstrahls (f1 bis f8) angeordnet ist, vorgelagert vor der Aufweitungslinse (25), um die Bahn des geradlinigen kohärenten Lichtstrahls (f1 bis f8) und dann diejenige des sich daraus ergebenden divergierenden geraden Lichtstrahls in die Richtung der Glashalterung (D) der Fassung (C) des von dem Träger (2) gehaltenen Gestells (M) auszurichten.

24. Vorrichtung nach Anspruch 23, in Abhängigkeit von einem der Ansprüche 18 und 19, bei welcher ein einzelner Reflexionsspiegel (27) und eine einzelne Aufweitungslinse (25) in Form eines zylindrischen Stabs jedem der zwei symmetrischen Serien von nebeneinander angeordneten Lichtstrahlen (F1 bis F4; F5 bis F8) zugeordnet sind.

25. Vorrichtung nach einem der Ansprüche 13 bis 24, bei welcher die optischen Aufnahmenrnittel einen optischen Matrixsensor (31) und ein zugeordnetes Objektiv (32) umfassen, welche beide entlang der einer gemeinsamen optischen Achse (34) angeordnet sind, wobei zumindest eine Reflexionsspiegel (33, 36) schräg an dieser optische Achse (34) angeordnet ist, um diese letztere entlang einem Weg auszurichten, dessen finaler Zweig die gewünschte optische Richtachse bildet.

26. Vorrichtung nach Anspruch 25, bei welcher die optische Achse (34) schräg bezüglich der Drehachse (11) des Lesekopfs (9) ist und die Reflexionsspiegel (33, 36), zumindest von der Anzahl zwei, beiderseits der Achse (11) des Lesekopfes (9) angeordnet sind, um die optische Achse (34) entlang eines Zick-Zack-Weges mit zumindest drei Zweigen auszurichten.

27. Vorrichtung nach einem der Ansprüche 25 und 26, bei welcher zumindest eines der Elemente aus optischem Matrixsensor (31) und zugeordnetem Objektiv (32) entlang der optischen Achse (34) unter der Einwirkung von Einstellmitteln beweglich sind, welcher ein Fokussieren der optischen Aufnahmemittel erlauben.

28. Vorrichtung nach Anspruch 27, bei welcher nur der optische Matrixsensor (31) entlang seiner optischen Achse beweglich ist.

29. Vorrichtung nach einem der Ansprüche 13 bis 28, bei welcher die allgemeine Ausrichtung jedes geraden Lichtstrahls (F1 bis F8) und der optischen Richtachse schräg bezüglich der Drehachse (11) des Lesekopfs (9) sind, derart, dass die Aussendemittel (20, 21) und die optischen Aufnahmemittel (31, 32, 33, 36) innerhalb des Lesekopfes aufgenommen sind, unterhalb einer oberen Wand (17) von letzterem, im Wesentlichen senkrecht zu seiner Drehachse (11), wobei die geraden Lichtstrahlen (F1 bis F8) und die optische Richtachse eine Aufnahmefenster (18), welches in dieser Wand vorgesehen ist, schräg queren.

30. Vorrichtung nach einem der Ansprüche 13 bis 29, bei welcher die optischen Aufnahmemittel einen optischen Matrixsensor (31) vom Typ CMOS umfassen.

31. Vorrichtung nach einem der Ansprüche 13 bis 30, bei welcher der Lesekopf (9) drehbar auf einem Wagen (5) montiert ist, welcher bezüglich dem Träger (2) des Gestells (M) zwischen zwei Lesepositionen beweglich ist, in welchen sich der Lesekopf (9) ausgerichtet bezüglich der einen oder der anderen der zwei Fassungen (C) des Gestells (M) befindet.

32. Vorrichtung nach einem der Ansprüche 13 bis 31, umfassend zusätzliche Haltemittel (50) für einen Umriss (G), welche so angeordnet sind, dass sie bezüglich des Lesekopfes (9) um eine Achse (51) parallel zu der Achse (11) des Lesekopfes (9) unter Einwirkung von zugeordneten Antriebsmitteln (55) zu drehen, derart, dass der äußere Rand (E) des Umrisses (G) ausgerichtet bezüglich der Aussendemittel (20, 21) und der optischen Aufnahmemittel (31, 32, 33, 36) vorbeigeführt wird, während der Lesekopf (9) fest in einer bestimmten Winkelposition gehalten wird.
